# EUROPEAN PATENT SPECIFICATION

(11) **EP 0 912 446 B1**
(45) Date of publication and mention of the grant of the patent: **05.09.2001**
(21) Application number: 97917354.9
(22) Date of filing: 18.04.1997
(51) Int. Cl.: C02F 1/44

(54) **WATER TREATMENT**
WASSERBEHANDLUNG
TRAITEMENT DE L'EAU

(30) Priority: 23.04.1996 GB 9608344
(43) Date of publication of application: 06.05.1999
(73) Proprietor: AEA Technology plc, Didcot, Oxfordshire OX11 0QJ (GB)
(72) Inventor: BOLER, Stephen, Andrew, Thurso, Caithness KW14 7QN (GB); CAMPBELL, James, Derek, Thurso, Caithness KW14 7AN (GB)
(74) Representative: Mansfield, Peter Turquand
(86) International application number: GB9701076
(87) International publication number: WO9739981

(56) References cited:
- EP-A- 0 467 735
- FR-A- 2 365 523
- US-A- 3 758 405
- US-A- 5 285 903
- JOURNAL OF MEMBRANE SCIENCE, vol. 101, no. 1/02, 15 May 1995, pages 67-81, XP000542065 PORTER J J ET AL: "FILTRATION STUDIES OF SELECTED ANIONIC DYES USING ASYMMETRIC TITANIUM DIOXIDE MEMBRANES ON POROUS STAINLESS-STEEL TUBES"

## Description

This invention relates to a method for treating water, in particular to remove coloration from drinking water.

In many parts of the world drinking water supplies are coloured brown or browny-yellow by dissolved or suspended material which is not removed by filtration through a sand bed. Such coloration is commonly associated with peat, and the colour may be due to humic material, in particular humic and fulvic acids; humic acid is soluble in alkali but insoluble in acid, while fulvic acid is soluble in either alkali or acid, and their molecular weights are between about 1000 and say 20 000 for humic acid, and between about 300 and 3000, for fulvic acid. If such water is disinfected by chlorination, organic halogenated compounds can be formed which may be carcinogenic. It is known that such coloration can be removed from water by reverse osmosis or nanofiltration, that is to say using dense (nonporous) membranes through which water selectively diffuses, and which impose a molecular weight cut-off (MWCO) of less than 500, but it is difficult to achieve large throughputs. For example W. Agui et al. (The Science of the Total Env., 117/8 (1992) 543) describe use of a low pressure reverse osmosis unit for this purpose; at an operating pressure of 1.12 MPa the permeation flux was only 12.86 litres m⁻² h⁻¹.

According to the present invention there is provided a method for treating drinking water to remove coloration, the method comprising subjecting the water to cross-flow filtration with a membrane, in which the coloration is due to humic and fulvic acids, and the membrane has an aperture size or cut-off value in the range 10 000 MWCO to 0.5 µm.

Drinking water standards in the UK and those of the European Community specify that the colour should be below 20 Hazen units. Such filtration membranes do not adequately remove the colour if used for through-flow filtration, but surprisingly they have been found to do so very effectively in cross-flow. The permeation rate initially decreases and then reaches a steady state. The colour is typically reduced from 100 Hazen units or more to between 10 and 30 Hazen units, while the concentration of organic material is reduced, for example from about 10 ppm to about 2 ppm.

The membrane is desirably an ultrafiltration membrane, and the cut-off value is preferably between 10 000 and 150 000 MWCO as this ensures that any microorganisms in the water are removed, and enables an adequate permeability to be achieved. A preferred membrane is an inorganic membrane, such as an insoluble oxide coating such as an alumina or titania coating, most preferably a zirconia coating or a zirconia/titania coating, on a tubular substrate of porous carbon or aluminia/titania ceramic. An alternative membrane is an organic tubular fibre membrane.

The incoming water may be through-filtered, using a prefilter, to ensure no particles large enough to block the ultrafiltration tubes are supplied to the ultrafiltration membranes; this is particularly advantageous where narrow-bore ultrafiltration tubes are used. Furthermore the water may be passed through an absorption column, for example of activated carbon, after being subjected to ultrafiltration; this enables the colour and organic content to be reduced to still lower levels, for example the colour can be reduced to less than 1 Hazen unit.

The invention will now be further and more particularly described, by way of example only, and with reference to the accompanying drawings in which:
- Figure 1: shows a flow diagram of a water treatment plant for performing the invention;
- Figure 2: shows graphically the variations in the colour of water with time during operation of the plant of Figure 1.

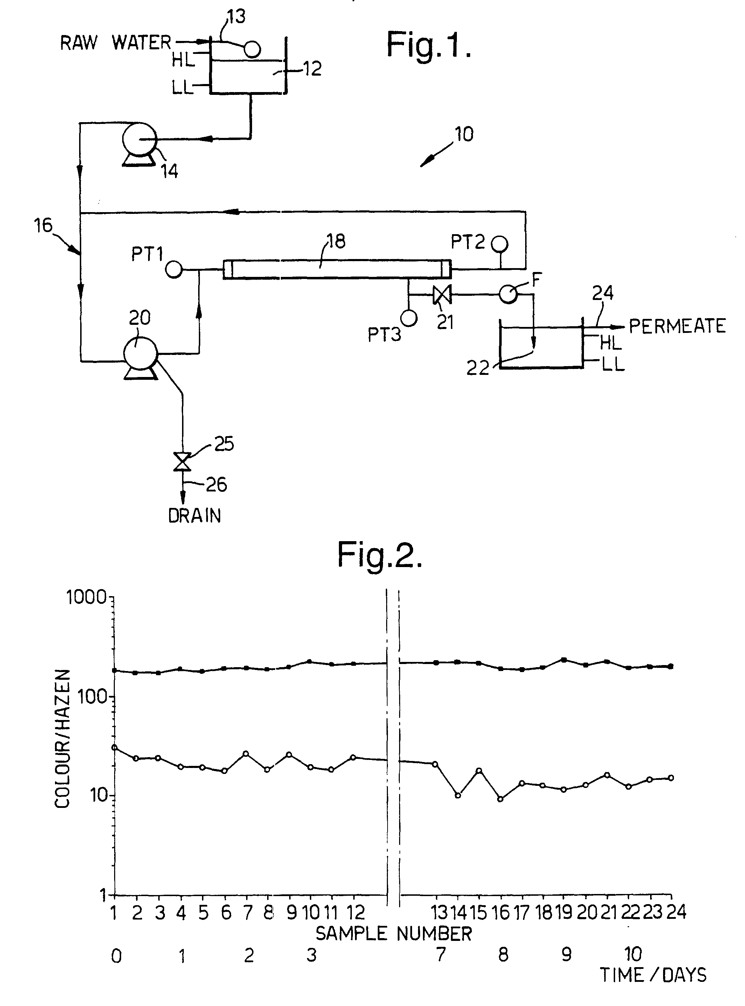

Referring to Figure 1, a water treatment plant 10 includes a feed tank 12 to which raw water is supplied via a ballcock valve 13. Water from the tank 12 is pumped by a pressurising pump 14 into a filtration circuit 16. The circuit 16 includes an ultrafiltration module 18, and a recirculating pump 20. Permeate water emerges from the module 18, and flows via a valve 21 and a flowmeter F to a permeate tank 22. An outlet duct 24 from the tank 22 thus enables permeate water to be withdrawn from the plant 10. A second outlet from the recirculating pump 20 leads via a valve 25 to a drain 26. To monitor operation of the plant 10 each tank 12 and 22 is provided with a high level gauge HL and a low level gauge LL, and pressure gauges PT1, PT2 and PT3 monitor the pressure of the water undergoing treatment at the two ends of the ultrafiltration module 18, and the pressure of the permeate water emerging from the module 18.

The module 18 consists of seven parallel tubes in a housing, the water being caused to flow along the bores of the tubes which are of length 1.2 m and of internal diameter 6 mm. The tubes are porous and permeable, being composed of bonded carbon particles with an essentially continuous coating of zirconia particles on the inside surface of the tubes. This coating provides a membrane with a molecular weight cut-off of 50 000 daltons(hence having a pore size much less than 0.1 µm), and so can be expected to remove small particulate and biological constituents present in the raw water. These are Carbosep M8 tubes (trade mark).

In operation of the plant 10 the pump 14 maintains the pressure in the circuit 16 at 4 bar, and the pump 20 ensures the flow rate of the water through the tubes of the module 18 is between 1 and 10 m/s, for example about 5 m/s. Every three hours the valve 25 is opened briefly to discharge raw water containing concentrated contaminants to the drain 26. Cleaned water emerges as the permeate. After an initial decrease over the first few days from 30 litres/hr to 18 litres/hr, the permeate flow rate has been observed to remain steady at about 18 litres/hr for a period of over two months, as long as the temperature of the water in the circuit 16 does not exceed about 20 °C. This steady rate corresponds to a specific membrane flux of about 0.60 m³ m⁻² day⁻¹ bar⁻¹. The module 18 can then be cleaned chemically with sodium hypochlorite to remove any fouling material, and the permeate flow rate is restored to the initial value.

Referring now to Figure 2, there is shown graphically the variation with time of the colour of the raw water (black squares) supplied to the plant 10, and of the permeate water (circles), over a period of operation of eleven days. (The colour is measured in Hazen units, by comparison with a platinum/cobalt standard at a wavelength of 400 nm.) Samples were taken three times a day for the first four days and for the last four days. In this particular case the raw water samples were observed to contain peaty solids up to 1 mm in size, and had a mean colour of 198 Hazen (with a standard deviation, σ, of 16 Hazen). Throughout the period of operation the permeate samples consistently showed a significantly reduced colour content, with a mean value of 18 Hazen (σ = 5.7). It was also observed that there was better colour removal during the last four days, for which the mean value was 14 Hazen (σ = 3.2).

Measurements were also made on the samples to determine the total organic carbon content. The raw water had a mean value of total organic carbon of 9.5 mg/litre (σ = 4.0), while the permeate consistently had much less, the mean value for the permeate being 1.7 mg/litre (σ = 1.5). Other measurements on the samples showed that the permeate was of slightly higher pH than the raw water, the mean pH of the permeate being 6.4 and the mean increase in pH being 0.9. The iron concentration was also decreased, from 727 µg/litre (σ = 274) in the raw water to 170 µg/litre (σ = 62) in the permeate. Furthermore the bacteriological concentration of coliforms and of E. coli was reduced from 53 per 100 ml to zero.

The most surprising change is the reduction in colour, because the colour is primarily due to humic substances whose molecular weights are well below the cut-off value stated for the ultrafiltration module 18. For comparison, samples of raw water from the same source have been passed through straight-through, polymeric-membrane ultrafiltration cells with a range of different molecular weight cut-offs, with the following results for the colours:

| | |
|---|---|
| raw water | 120 Hazen |
| filtrate through 100 000 MWCO membrane | 120 Hazen |
| filtrate through 50 000 MWCO membrane | 68 Hazen |
| filtrate through 10 000 MWCO membrane | 43 Hazen |
| filtrate through 3 000 MWCO membrane | 16 Hazen |

These results are consistent with the expected range of molecular weights of humic and fulvic acids, and show how unexpected is the reduction in colour achieved with the plant 10 using a 50 000 MWCO ultrafiltration module 18.

It will be appreciated that the plant 10 can be modified in a variety of ways while remaining within the scope of the invention. For example the feed tank 12 might form part of the recirculation circuit, with a single pump to circulate and pressurise the water, and with a restrictor valve at the outlet of the ultrafiltration module 18 to maintain the high pressure within the module 18. A variety of different ultrafiltration membranes may be used in the module 18, some of which are as follows:

### 1. Inorganic Microfiltration Membrane

Raw water has been treated as described above, but using a Carbosep M14 tube, that is a porous carbon tube with a zirconia coating, but with pores of size 0.14 µm (which is towards the upper limit of pore sizes for ultrafiltration membranes or at the lower limit for microfiltration membranes). Operation was in cross-flow. The following results were obtained for the colour:

| | | |
|---|---|---|
| raw water | | 68 Hazen |
| permeate after | 15 minutes | 23 Hazen |
| | 2.5 hours | 9 Hazen |
| | 6 hours | 9 Hazen |

### 2. Organic Membrane (Polysulphone)

Tests have been carried out using, as the ultrafiltration module 18, a 1 m² membrane area Pall Microza (trade marks) polymeric hollow fibre, 0.8 mm internal diameter, (poly-sulphone) unit with a 13 000 MWCO rating. In these tests the raw water varied between 125 and 200 Hazen; the permeate colour was typically 15 to 20 Hazen, although after operation for 12 hours the colour was reduced to 12 Hazen.

### 3. Organic Membrane (Cellulosic Ester)

A series of tests have been carried out using a Flosep (trade mark) hollow fibre module (organic cellulosic ester membrane) rated at 180 000 MWCO. Typically the colour of the water, initially about 130 Hazen, was removed down to about 90 Hazen. The longest run time was 4 hours (because peaty particles caused blockage of the membrane tubes), but there was no observable improvement in colour removal over this period.

### 4. Inorganic Ceramic Membrane

Tests have been carried out using, as the ultrafiltration module 18, a 25 mm diameter porous alumina/titania cylinder with nineteen bores or channels parallel to the longitudinal axis and of diameter 3.5 mm, referred to as a Kerasep module (trade mark). Each channel has a surface coating of zirconia which constitutes the membrane. The module has a membrane area of 0.245 m² and a pore rating of 150 000 MWCO. With raw water of colour between 75 and 200 Hazen, the permeate colour was reduced to below 10 Hazen immediately; and over a period of a month the permeate colour was generally between 2 and 5 Hazen, and never exceeded 9 Hazen. The flow rate of permeate is similar to that with the Carbosep module described in relation to Figure 1, the specific membrane flux being mostly about 0.6 m³ m⁻² day⁻¹ bar⁻¹.

### 5. Inorganic Ceramic Membrane

Tests have also been carried out with a different Kerasep module, differing only in that the pore rating is 15 000 MWCO. In all respects the results obtained were substantially the same as those with the 150 000 MWCO membrane.

The Kerasep module with 15 000 MWCO pore rating has also been used to treat water from a different source, the raw water ranging in colour over a 3 month period between about 10 Hazen and 120 Hazen. The colour of the permeate was always less than that of the raw water, and ranged between about 3 Hazen and 20 Hazen. The operating conditions were different during the first month A than for the next two months B, and during the latter period B, the permeate flow rate was about half the rate during the first month A.

The operating conditions and colour removal were as follows:

| | Transmembrane Pressure/bar | crossflow Velocity/ ms⁻¹ | Average Raw Water /Hazen | Average Permeate /Hazen | Average Colour Removal |
|---|---|---|---|---|---|
| A | 4 | 4 | 43.1 | 11.3 | 66% |
| B | 5 | 3 | 55.2 | 6.2 | 88% |

It will be observed that the colour removal was significantly better over the second two months, when the pressure was higher. These figures may be compared to that achieved by conventional water treatment (coagulation, settlement and sandbed filtration) which on average removed 92% of the colour, reducing the colour on average to 3.9 Hazen for the same water supply.

### 6. Inorganic Ceramic Membranes

Two ceramic membranes from Tridelta Filtrations Technologie under the name Porocer (trade mark) were tested on a laboratory rig at a transmembrane pressure of only about 1 bar and a crossflow velocity of 0.6 m/s. The first membrane (P) is a tube of bore 7 mm and external diameter 10 mm, of porous alumina, with an alumina membrane coating rated at 0.1 µm (referred to as a microfiltration membrane). The second membrane (Q) is a tube of external diameter 10 mm defining three channels of bore 3.6 mm, of porous alumina, with a membrane coating of zirconia on titania rated at 50 000 MWCO (referred to as an ultrafiltration membrane). Each tube is of length 20 cm. The colour was as follows (values in Hazen units):

| | P | Q |
|---|---|---|
| raw water | 28 | 28 |
| permeate after 15 min | 15 | 15 |
| 30 min | 13 | 14 |
| 60 min | 10 | 10 |
| 120 min | 9 | 9 |
| 180 min | 8 | 9 |

From the above examples it will be seen that the process works with both inorganic and organic membranes, but that better results are obtained with inorganic membranes. With a zirconia membrane with pores as large as 0.14 µm it takes a short while before the colour removal is fully effective. With zirconia membranes of pore ratings 15 000, 50 000 MWCO and 150 000 MWCO and a transmembrane pressure of 4 bar the process is very effective from the start, although it does appear to become slightly more effective over the first few days.

The observation that the permeate flow rate initially undergoes a gradual decrease suggests there may be a build up of some material on the membrane surface. A possible explanation is that humic acids or other humic materials become adsorbed on the surface of the zirconia, and that these adsorbed materials suppress the passage of humic material through the pores of the membrane. The gel polarisation layer of contaminants at the boundary layer of the recirculating water which is expected to form under crossflow conditions is evidently surprisingly effective at eliminating humic molecules, even at the low end of the molecular weight range, and its performance may be being enhanced by such an adsorbed layer. The observation that increasing the transmembrane filter pressure and decreasing the crossflow velocity with a Kerasep module improves the colour removal, conforms to the expected behaviour of such a gel polarisation layer.

If a greater degree of colour removal is desired, it can be achieved by coagulation, for example by adding 1 ppm iron to the raw water, in the form of ferric sulphate. Ferric hydroxide precipates, and tends to coagulate the humic materials, so that the ultrafiltration process provides a permeate of even lower colour. For example with the inorganic microfiltration membrane the colour of the permeate was reduced from about 9 Hazen to about 5 Hazen. Alternatively the permeate might be passed through a carbon bed filter; this has been found to reduce the colour still further, for example to less than 0.1 Hazen, although its effectiveness depends on the type of carbon used and on the flow rate through it.

## Claims

1. A method for treating drinking water to remove coloration, the method comprising subjecting the water to cross-flow filtration with a membrane, **characterised in that** the coloration is due to humic and fulvic acids, and the membrane has an aperture size or cut-off value in the range 10 000 MWCO to 0.5 µm.

2. A method as claimed in Claim 1 wherein the aperture size is between 10 000 and 150 000 MWCO.

3. A method as claimed in Claim 1 or Claim 2 wherein the membrane is an inorganic membrane.

4. A method as claimed in Claim 3 wherein the membrane comprises an insoluble oxide.

5. A method as claimed in Claim 4 wherein the membrane is of zirconia.

## Patentansprüche

1. Verfahren zur Behandlung von Trinkwasser zur Entfernung von Färbungen, wobei das Verfahren das Unterwerfen des Wassers unter eine Querstromfiltration mit einer Membran umfasst, **dadurch gekennzeichnet,** dass die Färbung auf Humussäuren und Fulvosäuren beruht und dass die Membran eine Öffnungsgröße oder einen Ausschlusswert im Bereich von 10 000 MWCO (Molecular Weight Cut-Off = Molekulargewichtsausschluss) bis 0,5 µm aufweist.

2. Verfahren gemäß Anspruch 1, worin die Öffnungsgröße zwischen 10 000 und 150 000 MWCO liegt.

3. Verfahren gemäß Anspruch 1 oder Anspruch 2, worin die Membran eine anorganische Membran ist.

4. Verfahren gemäß Anspruch 3, worin die Membran ein unlösliches Oxid umfasst.

5. Verfahren gemäß Anspruch 4, worin die Membran aus Zirkonia besteht.

## Revendications

1. Procédé pour le traitement de l'eau potable destiné à en éliminer la coloration, le procédé comprenant l'étape consistant à soumettre l'eau à une filtration à courants croisés grâce à une membrane, **caractérisé en ce que** la coloration est due à des acides humiques et fulviques, et la membrane présente une taille d'ouverture ou un seuil d'arrêt dans la plage comprise entre une valeur de séparation de 10 000 Mm (Masse moléculaire) et 0,5 µm.

2. Procédé selon la revendication 1 dans lequel la taille d'ouverture est dans la plage comprise entre 10 000 et 150 000 Mm (Masse moléculaire).

3. Procédé selon la revendication 1 ou la revendication 2 dans lequel la membrane est une membrane inorganique.

4. Procédé selon la revendication 3 dans lequel la membrane comprend un oxyde insoluble.

5. Procédé selon la revendication 4 dans lequel la membrane est en zircone.
